# EUROPÄISCHE PATENTANMELDUNG

(11) **EP 0 859 188 A2**
(43) Veröffentlichungstag der Anmeldung: **19.08.1998**
(21) Anmeldenummer: 98100618.2
(22) Anmeldetag: 15.01.1998
(51) Int. Cl.: F21M 7/00, B60Q 1/52

(54) **Scheinwerferbetauungsschutz**

(30) Priorität: 12.02.1997 DE 19705256; 31.07.1997 DE 19733000
(71) Anmelder: Volkswagen Aktiengesellschaft, 38436 Wolfsburg (DE); Hella KG Hueck & Co., 59552 Lippstadt (DE)
(72) Erfinder: Bäker, Wolfgang, 38114 Braunschweig (DE); Ruchatz, Thomas, Dipl.-Ing., 38165 Lehre (DE); Witt, Ulrich, 59557 Lippstadt (DE); Höver, Norbert, 59558 Lippstadt (DE)

(57) **Zusammenfassung**

Die Erfindung bezieht sich auf einen Scheinwerfer mit einem Scheinwerfergehäuse und einer Abdeckscheibe, die die Lichtaustrittsöffnung des Scheinwerfergehäuses abdeckt, der einen Abstandssensor mit einer optischen Oberfläche, durch die optische Sensorstrahlen hindurchtreten, in dem Scheinwerfergehäuse umfaßt, der gekennzeichnet ist durch eine Betauungsschutzvorrichtung (7, 8, 9, 10, 11) zur Verhinderung von Kondensation auf optischen Oberflächen (6) in dem Scheinwerfergehäuse (1).

## Beschreibung

Die Erfindung bezieht sich auf einen Scheinwerferbetauungsschutz für Scheinwerfer mit eingebautem optischen Abstandssensor eines Kraftfahrzeugs nach dem Oberbegriff des unabhãngigen Anspruchs.

Beim Absinken der Lufttemperatur unter den Taupunkt entsteht durch Kondensation von Wasserdampf an einer kalten Wand ein Niederschlag oder Tau. Dieser Niederschlag bildet kleine Tröpfchen, die sich bei einem Fahrzeug insbesondere an den Scheiben der Fahrgastzelle und an der Abdeckscheibe in den Scheinwerfern niederschlagen und bei besonders tiefen Temperaturen anfrieren können. Während dadurch bei den Scheiben der Fahrgastzelle die Sicht für den Fahrer erheblich beeinträchtigt wird, führt bei den Scheinwerfern kondensierter Wasserdampf einerseits zu einer stärker gestreuten Lichtabstrahlung des Scheinwerfers und damit zu ungünstiger Fahrbahnausleuchtung und kann andererseits den (vollständigen) Ausfall eines eingebauten optischen Abstandssensors bewirken. Durch die Wassertröpfchen werden die Abtaststrahlen des Abstandssensors so stark abgelenkt, daß eine Abstandsmessung zu einem sich vor dem Fahrzeug befindenden Hindernis nicht mehr möglich ist, der Abstandssensor ist "erblindet".

Jedoch hat der Einbau des Abstandssensors in den Scheinwerfer den Vorteil, daß weder das Design noch der Luftwiderstandsbeiwert des Fahrzeugs durch zusätzliche Komponenten oder Öffnungen an der Karosserie des Fahrzeugs beeinträchtigt werden. Ein solcher in einem Scheinwerfergehäuse integrierter Abstandssensor ist z. B. in 196 32 252.9 beschrieben.

Um die durch den Einbau des Abstandssensors in das Scheinwerfergehäuse gewonnenen Vorteile nutzen zu können, aber das Betauen der Abdeckscheibe des Scheinwerfers und auch das Betauen wichtiger optischer Oberflächen im Scheinwerfergehäuse zu vermeiden, ist es Ziel der Erfindung, einen Scheinwerfer mit integriertem optischen Abstandssensor anzugeben, der so aufgebaut ist, daß das Kondensieren von Wasserdampf im Scheinwerfergehäuse eines Fahrzeugs verhindert wird.

Dieses Ziel wird mit einem Fahrzeugscheinwerfer mit einer Betauungsschutzvorrichtung nach Anspruch 1 erreicht. Die Unteransprüche beziehen sich auf vorteilhafte Ausführungsformen bzw. Weiterentwicklungen des erfindungsgemäßen Fahrzeugscheinwerfers.

Es wird erfindungsgemäß ein Scheinwerfer mit einem Scheinwerfergehäuse und einer Abdeckscheibe, die die Lichtaustrittsöffnung des Scheinwerfergehäuses abdeckt, der einen Abstandssensor mit einer optischen Oberfläche, durch die optische Sensorstrahlen hindurchtreten, in dem Scheinwerfergehäuse umfaßt, vorgeschlagen, der gekennzeichnet ist durch eine Betauungsschutzvorrichtung zur Verhinderung von Kondensation auf den optischen Oberflächen im Scheinwerfergehäuse.

In dieser Beschreibung wird unter einer optischen Oberfläche jede transparente Oberfläche verstanden, durch die Licht hindurchtritt und an der Kondensation auftreten kann. Dies sind insbesondere die Abdeckscheibe des Scheinwerfers und Austritts- bzw. Eintrittsfenster von in das Scheinwerfergehäuse eingebauten optischen Sensoren. Der Glaskolben der Lampe stellt keine solche Oberfläche dar, da an dem Glaskolben aufgrund der hohen Temperatur keine Kondensation auftreten kann.

Eine bevorzugte Ausführungsform des erfindungsgemäße Scheinwerfers umfaßt eine Heizvorrichtung zum Erzeugen vorgeheizter Luft in dem Scheinwerfergehäuse. Dabei kann es sich um eine einfache elektrische Heizung des gesamten Scheinwerfers handeln, deren Heizdrähte in geeigneter Art und Weise um das Scheinwerfergehäuse herum außerhalb des eigentlichen Scheinwerfers angeordnet sind, mit der der Scheinwerfer als ganzes gleichmäßig auf eine Temperatur über dem Taupunkt gebracht wird.

Bei einer weiteren bevorzugten Ausführungsform des erfindungsgemäßen Scheinwerfers umfaßt das Scheinwerfergehäuse mehrere Öffnungen für die Luftzirkulation im Gehäuse. Dabei wirkt wenigstens eine Öffnung als Luftzufuhrdüse und wenigstens eine Öffnung als Luftauslaßöffnung.

Im Scheinwerfer selbst kann weiterhin ein Gebläse für den Luftaustausch vorgesehen sein. Durch die Arbeit des Gebläses wird vermieden, daß durch andere Öffnungen Feuchtigkeit bzw. Schmutz angesaugt wird. Zusätzlich kann der erhöhte Luftaustausch zur Kühlung der im Scheinwerfer vorhandenen Systeme genutzt werden.

Weiterhin kann vor der Luftzufuhröffnung ein Filter vorgesehen sein, durch welchen die Luft vor Eintritt in den Scheinwerfer geführt wird, um Verschmutzungen der optischen Systeme zu verhindern.
Bei einer entsprechenden Ausbildung des Filters wird durch ihn verhindert, daß sich eine ungewollte Strömung bei abgeschaltetem Gebläse einstellt. Die Funktion eines bereits vorhandenen gebläsefreien Lüftungssystems im Scheinwerfer bleibt so erhalten. Des weiteren kann für die Luftauslaßöffnung ein Rückschlagventil vorgesehen sein, um Verschmutzungen und unkontrollierten Feuchtigkeitseintritt zu verhindern.

Nach einer Ausführungsform sind Einlaß- und Auslaßöffnungen zweckmäßigerweise an den für den Lampenwechsel vorgesehenen Scheinwerferöffnungen angeordnet.

Der erfindungsgemäße Scheinwerfer kann als Betauungsschutz ein ohmsches Heizelement umfassen, das direkt an oder auf bzw. in unmittelbarer Nachbarschaft zu den optischen Oberflächen angebracht ist. Die Bildung eines Beschlags wird im Scheinwerfergehäuse mit anderen Worten in der Art einer Scheibenheizung analog zur Heckscheibenheizung verhindert. Insbesondere kann es dabei ausreichen, daß die Leiterbahnen nur um das Scheinwerferglas herum angeordnet sind, ohne einen Teil der optischen Oberfläche abzudecken.

In einer Weiterentwicklung des erfindungsgemäßen Scheinwerfers umfaßt die Betauungsschutzvorrichtung einen Temperatursensor, der in Wärmekontakt mit dem Lichtreflektor eines oder mehrerer (Licht-) Reflektoren steht. Je nach Ausgangssignal dieses Temperatur-sensors wird dann die Betauungsschutzvorrichtung automatisch eingeschaltet, wenn die Temperatur am Lichtreflektor einen vorgegebenen Wert überschreitet.

In einer weiteren bevorzugten Ausführungsform der Erfindung umfassen die Mittel eine wasserspreitende, d. h. hydrophobierende Schicht auf jeder optischen Oberfläche im Scheinwerfergehäuse. Diese kann aus einem Polymermaterial bestehen.

Die erfindungsgemäße hat den Vorteil, daß durch die Betauungsschutzvorrichtung ein Beschlagen der optischen Oberflächen im Scheinwerfer sehr schnell rückgängig gemacht werden kann oder gar nicht erst auftritt.

Zum besseren Verständnis der Erfindung wird im folgenden ein Ausführungsbeispiel des erfindungsgemäßen Scheinwerfers beschrieben, wobei Bezug auf die Zeichnung genommen wird.

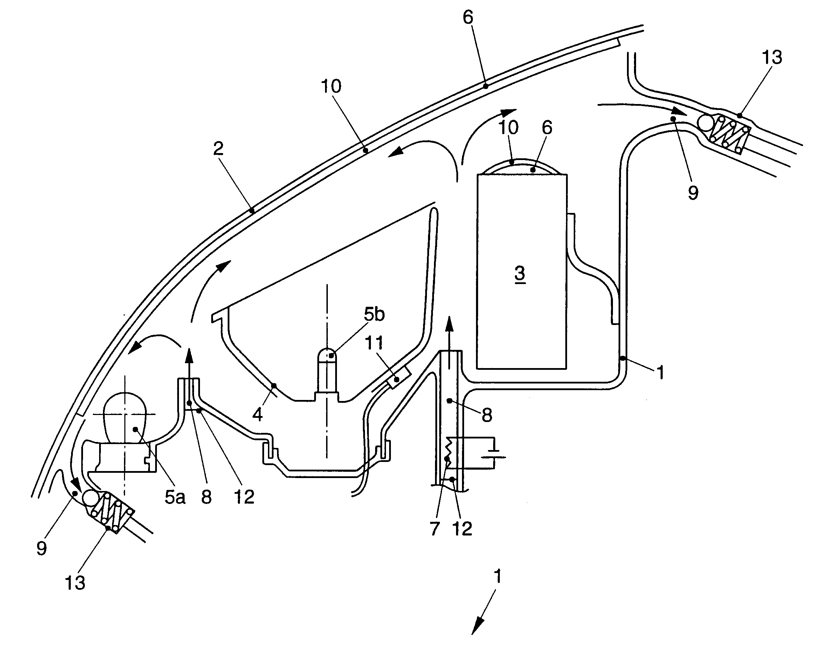

Die Fig. 1 zeigt eine Ausführungsform des erfindungsgemäßen Scheinwerfers in einer Ansicht von oben.

In der Fig. ist ein linker Scheinwerfer eines Fahrzeugs in Draufsicht dargestellt. Der Scheinwerfer umfaßt ein Scheinwerfergehäuse 1, das ihn vom dahinter liegenden Fahrzeugraum trennt. Nach vorne ist das Scheinwerfergehäuse 1 durch eine transparente Abdeckscheibe 2 abgeschlossen. In die Abdeckscheibe können optische Elemente zur Strahlformung des abgestrahlten Lichtes integriert sein. In dem Scheinwerfergehäuse 1 befinden sich Sockel für eine Abblendlichtleuchte 5a und eine Femlichtleuchte 5b. Die Sockel für die Leuchten 5a und 5b weisen jeweils einen Reflektor 4 auf, der das von der Leuchte 5a oder 5b nach hinten abgestrahlte Licht für die Fahrbahnausleuchtung als quasi parallelen Lichtstrahl nach vorne oder für die Seitenausleuchtung teilweise zur Seite lenkt.

Die Temperatur des Quarzkolbens der Abblendlichtleuchte 5a oder der Fernlichtleuchte Sb beträgt bei eingeschaltetem Licht typischerweise 900 °C, der Reflektor wird auf eine Temperatur von einigen 100 °C aufgeheizt, und die Abdeckscheibe 2 kann je nach Umgebungstemperatur eine sehr viel niedrigere Temperatur haben. Daher kann es auf der Innenseite der Abdeckscheibe 2, d. h. auf der optischen Oberfläche 6 der Abdeckscheibe 2 in dem Scheinwerfergehäuse 1 je nach Partialdruck des Wasserdampfes in der Luft zur Kondensation von Wasserdampf mit den bereits oben genannten Nachteilen und Gefahren kommen: das Wasser kann an der optischen Oberfläche 6 der Abdeckscheibe 2 u. U. gefrieren und die optische Transparenz der Abdeckscheibe 2 beeinträchtigen.

Neben die Fernlichtleuchte 5b ist zur Mitte der Fahrzeugfront hin ein optischer Abstandssensor 3 in das Scheinwerfergehäuse 1 eingebaut. Der Abstandssensor 3 hat ein Austritts- bzw. Eintrittsfenster für optische Sensorstrahlen zum Bestimmen des Abstandes des Fahrzeugs von einem vor ihm liegenden Hindernis. Da in dem Abstandssensor 3 im Gegensatz zu den Leuchten 5a und 5b sehr wenig Leistung verbraucht wird, entsteht im Abstandssensor 3 keine große Wärme. Das bedeutet, daß die optische Oberfläche 6 des Abstandssensors 3 wie auch die optische Oberfläche 6 der Abdeckscheibe 2 gegenüber der Leuchte 5a oder 5b und dem jeweiligen Reflektor 4 eine relativ niedrige Temperatur aufweist. An der optischen Oberfläche 6 dieses Austritts- bzw. Eintrittsfensters kann sich also ebenso wie an der optischen Oberfläche 6 der Abdeckscheibe 2 Wasserdampf niederschlagen und den Abstandssensor 3 "blind" machen.

Um die Kondensation von Wasserdampf auf den optischen Oberflächen 6 im Scheinwerfergehäuse 1 zu unterbinden bzw. schnell nückgängig zu machen, weist der erfindungsgemäße Scheinwerfer in der dargestellten Ausführungsform zwei Luftzufuhröffnungen 8 und zwei Luftabsaugöffnungen 9 auf. Während sich die Luftzufuhröffnungen 8 vorzugsweise in einem zentralen Bereich des Scheinwerfers befinden, sind die Luftauslaßöffnungen 9 vorzugsweise im Randbereich des Scheinwerfers angeordnet. Die Luftzufuhröffnungen 8 sind jeweils mit einem Filter 12 ausgestattet, um Verschmutzungen des optischen Systems des Scheinwerfers zu vermeiden. Die Auslaßöffnungen 9 verweisen zusätzlich Rückschlagventile 13 auf, um auch hier einen Verschmutzungs- und Feuchtigkeitseintritt zu verhindern. Die eigentliche Öffnung der Luftzufuhröffnungen 8 und Luftauslaßöffnungen 9 ist dabei so geformt, daß im Zusammenspiel mit der Abdeckscheibe 2 und weiteren Komponenten im Scheinwerfergehäuse 1 sich Luftströme im Scheinwerfer ergeben, die möglichst vollständig alle sensiblen optischen Oberflächen 6 überstreichen und so darauf eine Niederschlagsbildung verhindern. Solche Luftströme sind in Fig. 1 mit Pfeilen angedeutet. Ein zusätzliches, nicht dargestelltes Gebläse, welches im Inneren des Scheinwerfergehäuses 1 für den Luftaustausch sorgt, erzeugt im Scheinwerfergehäuse 1 einen Überdruck mit dessen Hilfe zusätzlich das Eindringen von Feuchtigkeit oder Schmutz durch andere im Scheinwerfergehäuse 1 vorhandene Öffnungen als die Einlaßöffnung 8 vermieden wird.

Obgleich bereits durch das Vorbeiströmen von Luft an den gefährdeten, relativ kühlen optischen Oberflächen 6 die Niederschlagsbildung deutlich erschwert wird, kann dieser Effekt noch wesentlich dadurch gesteigert werden, daß die vorbeiströmende Luft vorgewärmt wird. Dazu ist in der Ausführungsform in Fig. 1 eine Heizvorrichtung in Form eines Heizdrahtes 7 in wenigstens einer der Luftzufuhröffnungen 8 vorgesehen. Die durch die Zufuhröffnung strömende Luft streicht an dem Heizdraht 7 vorbei und erwärmt sich dabei. Dadurch steigt der Sättigungsdampfdruck für Wasserdampf in der Luft im Scheinwerfer, d. h. Wasser kondensiert nicht mehr so schnell, und außerdem wird die optische Oberfläche 6 der Abdeckscheibe 2 bzw. des Abstandssensors 3 schneller auf eine höhere Temperatur gebracht, bei der eine Kondensation nicht mehr möglich ist. Insgesamt wird außerdem durch die Zufuhr von Luft in den Scheinwerfer, die in der Luftzufuhröffnung erwärmt wurde (ohne dabei weiteren Wasserdampf aufnehmen zu können), und Absaugen der Luft aus dem Scheinwerfer die zunächst feuchte Luft schneller durch relativ trockenere Luft ersetzt.

Ist jedoch ein Luftaustausch im Scheinwerfergehäuse 1 technisch nicht möglich oder ökonomisch nicht sinnvoll, so kann eine elektrische Heizung vorgesehen werden, deren Heizdrähte in geeigneter Art und Weise um das Scheinwerfergehäuse 1 herum außerhalb des eigentlichen Scheinwerfers angeordnet sind und so den gesamten Scheinwerfer umkleiden. Mit der Heizung kann der Innenraum des Scheinwerfers als ganzes gleichmäßig auf eine Temperatur über dem Taupunkt gebracht werden und der Beschlag auf kälteren Flächen im Scheinwerfer schneller aufgelöst werden.

Zusätzlich kann als Betauungsschutz ein (nicht dargestelltes) ohmsches Heizelement vorgesehen werden, das direkt an oder auf bzw. in unmittelbarer Nachbarschaft zu den gefährdeten optischen Oberflächen 6 angebracht ist und die Bildung eines Beschlags den optischen Oberflächen 6 in der Art einer Scheibenheizung analog zur Heckscheibenheizung verhindert. Es kann dabei ausreichen, wenn die Leiterbahnen nur um die optischen Oberflächen 6 herum angeordnet sind, ohne einen Teil dieser abzudecken.

Da eine aktive Lüftung des Scheinwerfers oder Heizung wenigstens einzelner Elemente des Scheinwerfers Energie kostet und nicht immer nötig ist, ist die in der Fig. dargestellte Ausführungsform des erfindungsgemäßen Scheinwerfers mit einem Temperatursensor 11 versehen, der ein automatisches Ein- und Ausschalten der bisher beschriebenen Betauungsschutzvorrichtungen ermöglicht.

Zusätzlich zu den oben genannten Betauungsschutzvorrichtungen ist auf den sensiblen optischen Oberflächen 6 eine Beschichtung 10 vorgesehen, die das Beschlagen des Oberfläche verhindert. Bei der Beschichtung wird vorzugsweise eine hydrophobe und daher wasserspreitende Beschichtung verwendet. Die hydrophobe, vorzugsweise aus einem Polymermaterial bestehende Schicht wird auf jede zu schätzende optischen Oberfläche im Scheinwerfergehäuse aufgebracht. Das verwendete Polymermaterial hängt dabei von dem entsprechenden Trägermaterial ab, auf das es aufgebracht werden soll.
Das Phänomen des Niederschlags von Wasserdampf in Form von kleinen Tröpfchen auf kalten Oberflächen tritt natürlich nicht nur an der Abdeckscheibe des Scheinwerfers oder an dem eingebauten Abstandssensor auf, sondern es tritt an allen Elementen im Scheinwerfer auf, die eine Temperatur haben, die niedriger als die des Lichtreflektors 4 ist und die Kondensation zuläßt. Zusätzlich oder ersatzweise für die genannten Betauungsschutzvorrichtungen kann daher eine (nicht dargestellte) Kühlvorrichtung eingebaut werden, um bewußt Luftfeuchtigkeit kondensieren zu lassen und sie so der Luft im Scheinwerfer zu entziehen.

### BEZUGSZEICHENLISTE

- 1: Scheinwerfergehäuse
- 2: Abdeckscheibe
- 3: Abstandssensor
- 4: Reflektor
- 5a: Abblendlichtleuchte
- 5b: Fernlichtleuchte
- 6: optische Oberfläche
- 7: Heizdraht
- 8: Luftzufuhrdüse
- 9: Luftabsaugkanal
- 10: Beschichtung
- 11: Temperatursensor
- 12: Filter
- 13: Rückschlagventil

## Patentansprüche

1. Scheinwerfer mit einem Scheinwerfergehäuse und einer Abdeckscheibe, die die Lichtaustrittsöffnung des Scheinwerfergehäuses abdeckt, der einen Abstandssensor mit einer optischen Oberfläche, durch die optische Sensorstrahlen hindurchtreten, in dem Scheinwertergehäuse umfaßt, gekennzeichnet durch eine Betauungsschutzvorrichtung (7, 8, 9, 10, 11) zur Verhinderung von Kondensation auf optischen Oberflächen (6) in dem Scheinwerfergehäuse (1).

2. Scheinwerfer nach Anspruch 1, dadurch gekennzeichnet, daß die Betauungsschutzvorrichtung (7, 8, 9, 10, 11) eine Heizvorrichtung (7) zum Erzeugen vorgeheizter Luft in dem Scheinwerfergehäuse (1) umfaßt.

3. Scheinwerfer nach einem der Ansprüche 1 oder 2, dadurch gekennzeichnet, daß die Betauungsschutzvorrichtung (7, 8, 9, 10, 11) wenigstens eine Luftzufuhröffnung (8) und wenigstens eine Luftauslaßöffnung (9) in dem Scheinwerfergehäuse (1) umfaßt, die einen insbesondere auf die optischen Oberflächen (6) gerichteten Luftstrom erzeugen.

4. Scheinwerfer nach Anspruch 3, dadurch gekennzeichnet, daß ein Gebläse zur Erzeugung von Überdruck im Scheinwerfer vorgesehen ist.

5. Scheinwerfer nach Anspruch 3 oder 4, dadurch gekennzeichnet, daß vor der Luftzufuhröffnung (8) ein Luftfilter angeordnet ist.

6. Scheinwerfer nach einem der Ansprüche 3 bis 5, dadurch gekennzeichnet, daß der Luftauslaßöffnung (9) ein Rückschlagventil zugeordnet ist.

7. Scheinwerfer nach einem der vorangehenden Ansprüche, dadurch gekennzeichnet, daß die Betauungsschutzvorrichtung (7, 8, 9, 10, 11) wenigstens jeweils ein ohmsches Heizelement an oder benachbart zu jeder optischen Oberfläche (6) in dem Scheinwerfergehäuse (1) zum Beheizen der optischen Oberflächen (6) umfaßt.

8. Scheinwerfer nach einem der vorangehenden Ansprüche, gekennzeichnet durch einen Temperatursensor (11), der die Temperatur an einem Reflektor (4) in dem Scheinwerfergehäuse (1) erfaßt, und dadurch, daß die Betauungsschutzvorrichtung (7, 8, 9, 10, 11) automatisch für eine vorgegebene Zeitdauer eingeschaltet wird, wenn die Temperatur an dem Reflektor (4) einen vorgegebenen Wert überschreitet.

9. Scheinwerfer nach einem der vorangehenden Ansprüche, dadurch gekennzeichnet, daß die Betauungsschutzvorrichtung (7, 8, 9, 10, 11) eine Beschichtung (10) der optischen Oberflächen (6) in dem Scheinwerfergehäuse (1) umfaßt, die insbesondere aus einem wasserspreitenden Material besteht.

10. Scheinwerfer nach einem der vorangehenden Ansprüche dadurch gekennzeichnet, daß die Betauungsschutzvorrichtung (7, 8, 9, 10, 11) eine Kühlvorrichtung umfaßt, an der im Scheinwerfergehäuse (1) vorhandene Luftfeuchtigkeit kondensiert und entfernt wird.
